# FASCICULE DE BREVET EUROPEEN

(11) **EP 1 382 652 B1**
(45) Date de publication et mention de la délivrance du brevet: **05.03.2008**
(21) Numéro de dépôt: 03101106.7
(22) Date de dépôt: 23.04.2003
(51) Int. Cl.: C09J 7/02, B32B 3/12

(54) **Film adhésif perforé et son procédé de fabrication**
Perforiete Klebefolie und Herstellungsverfahren
Perforated adhesive film and process for producing it

(30) Priorité: 25.04.2002 FR 0205208
(43) Date de publication de la demande: 21.01.2004
(73) Titulaire: AIRBUS France, 31060 Toulouse (FR)
(72) Inventeur: Rambaud, Eric, 44840 Les Sorinieres (FR); Vitonou, Dona, 31300 Toulouse (FR)
(74) Mandataire: Poulin, Gérard

(56) Documents cités:
- GB-A- 2 096 535
- US-A- 6 099 683
- DATABASE WPI Section Ch, Week 198012 Derwent Publications Ltd., London, GB; Class A94, AN 1980-20945C XP002226020 & JP 55 017506 A (SHINNIPPON CORE KK) 7 février 1980 (1980-02-07)

## Description

### Domaine technique

L'invention a principalement pour objet un film adhésif perforé, destiné à être utilisé pour la fabrication de structures dites "sandwich", à âme alvéolée.

Plus précisément, le film adhésif perforé conforme à l'invention est prévu pour assurer la fixation d'une paroi sur l'une au moins des faces d'une structure alvéolée, telle qu'une structure en nid d'abeilles ou "NIDA".

L'invention a également pour objet un procédé de fabrication d'un tel film adhésif perforé.

### Etat de la technique

Les panneaux sandwich sont généralement assemblés par collage. Dans ce cas, une méthode connue consiste à déposer un film adhésif sur chacune des deux faces de l'âme alvéolée. Les parois sont ensuite collées sur lesdites faces, par contact avec ce film adhésif. Si nécessaire, une opération de polymérisation de l'adhésif est ensuite mise en oeuvre.

Lorsque cette méthode connue est utilisée, l'adhésif recouvre en totalité les deux surfaces de l'âme alvéolée, y compris les parties creuses des cellules. Cette méthode est donc inutilisable lorsque l'une au moins des parois du panneau doit demeurer poreuse après la phase de collage.

Pour s'affranchir de ce problème, différentes solutions ont été élaborées. Toutes ces solutions visent à ne laisser subsister l'adhésif que sur les extrémités des cloisons des cellules.

Une première technique connue est proposée par la société MacKAY Industries, Inc., USA. Elle consiste à chauffer, au moyen d'un flux d'air chaud, un film adhésif non perforé déposé préalablement sur l'une des faces de l'âme alvéolée. Lorsqu'une certaine température est atteinte, l'adhésif se fluidifie et migre vers les extrémités des cloisons des cellules, pour y former un bourrelet de colle.

Cette technique connue présente plusieurs inconvénients. Ainsi, elle ne peut être utilisée de façon satisfaisante que sur une seule face de l'âme alvéolée, car elle nécessite que les cellules soient ouvertes à leur extrémité opposée. En effet, si les cellules sont fermées, le flux d'air chaud qui chauffe le film adhésif chauffe aussi l'air contenu dans les cellules, de sorte que celui-ci se dilate et provoque une contre pression s'opposant à l'action mécanique du flux d'air chaud. De ce fait, le film adhésif peut éclater. Par conséquent, le bourrelet de colle n'est pas homogène et de l'adhésif peut être projeté à l'intérieur des cellules. Cela se traduit parfois par un bourrelet de colle incomplet et par un risque d'obturation d'une paroi poreuse rapportée par la suite sur l'âme alvéolée, du fait d'un écoulement ultérieur de la colle le long des cloisons des cellules, lors de la polymérisation finale.

Une autre technique connue est décrite dans le document US-A-5 944 935. Dans ce cas, on recouvre d'un écran poreux les films adhésifs non perforés préalablement déposés sur chacune des faces de l'âme alvéolée. L'ensemble est ensuite pressé et chauffé. Sous les effets combinés de la température et de la pression, les films adhésifs se fluidifient et migrent dans la structure poreuse des écrans au droit des cellules, tout en laissant un dépôt de colle sur les extrémités des cloisons des cellules. La colle est ensuite refroidie au moyen d'un cylindre réfrigérant et l'écran est retiré progressivement en laissant subsister les bourrelets de colle sur les extrémités des cloisons des cellules.

Cette autre technique connue présente, elle aussi, plusieurs inconvénients. Tout d'abord, elle est longue et complexe à mettre en oeuvre, car elle comporte de nombreuses opérations supplémentaires par rapport aux autres méthodes connues de collage (mise en place des écrans poreux, mise sous pression, refroidissement, enlèvement des écrans, etc.). Par ailleurs, cette technique est plus coûteuse que les autres méthodes connues car elle nécessite davantage de colle. En effet, un film adhésif plus épais est nécessaire du fait qu'une grande partie de la colle est enlevée avec les écrans poreux. De plus, cela induit une quantité importante de déchets (colle et écrans), ce qui pose des problèmes vis-à-vis de l'environnement. En outre, comme dans la technique précédente, le chauffage de l'âme alvéolée peut engendrer des déformations de celle-ci, notamment dans le cas de formes complexes. Enfin, cette technique semble difficilement applicable à des surfaces non planes, par exemple de forme sphérique concave ou convexe.

### Exposé de l'invention

L'invention a pour but de résoudre au moins en partie les problèmes posés par les techniques connues de fabrication de structures sandwich.

En particulier, l'invention vise à améliorer la fabrication des structures sandwich et à faciliter la formation de bourrelets de colle homogènes sur les faces des structures alvéolées destinées à être recouvertes de parois.

Conformément à l'invention, ce résultat est obtenu au moyen d'un film adhésif, tel que défini dans la revendication 1 annexée.

La présence de trous judicieusement répartis sur le film adhésif permet de faciliter la migration de la colle vers les extrémités des parois des cellules lorsque le film est chauffé.

Avantageusement, le film adhésif est percé au plus de trois trous en face de chacune des cellules de la structure alvéolée. Ainsi, la quantité de colle reste suffisamment importante pour permettre sa migration vers les extrémités des parois des cellules.

Dans ce cas, les trous sont avantageusement de forme sensiblement tronconique. Leur diamètre moyen est, par exemple, sensiblement égal à 1 mm.

De préférence, les trous sont répartis selon un réseau triangulaire régulier.

Dans ce cas, les trous peuvent notamment être alignés entre eux selon deux directions formant entre elles un angle d'environ 60°.

Plus précisément, les trous sont alors avantageusement espacés entre eux d'un pas Px sensiblement égal à 7xPo/9,5 dans une première desdites directions et d'une distance Py sensiblement égale à 4,5xPo/9,5 dans une direction orthogonale à cette première direction, Po étant le pas séparant les cellules de la structure alvéolée.

L'invention a également pour objet un procédé de fabrication d'un tel film adhésif, dans lequel les trous sont formés par poinçonnage d'un film adhésif non perforé.

On réalise alors avantageusement tous les trous en poinçonnant le film adhésif dans un même sens.

Par ailleurs, on utilise de préférence au moins un poinçon comportant une partie d'extrémité conique, d'angle compris entre 30° et 35° environ et une partie adjacente tronconique, d'angle compris entre 20° et 25° environ.

Pour réaliser les trous, on peut notamment utiliser une plaque ou un rouleau rotatif muni d'une pluralité de poinçons.

### Brève description des dessins

On décrira à présent, à titre d'exemple illustratif et nullement limitatif, un mode de réalisation préféré de l'invention, en se référant aux dessins annexés, dans lesquels :
- la figure 1 est une vue de dessus, qui représente schématiquement un film adhésif perforé conforme à l'invention, posé sur une face d'une structure alvéolée sur laquelle on désire coller une paroi ;
- la figure 2 est une vue de côté qui représente à plus grande échelle un poinçon adapté à la réalisation des trous du film adhésif de la figure 1 ; et
- la figure 3 est une vue en coupe illustrant la réalisation d'un trou dans un film adhésif à l'aide du poinçon de la figure 2.

### Description détaillée d'un mode de réalisation préféré

Comme on l'a décrit précédemment, l'invention concerne un film adhésif perforé, destiné à être utilisé pour fixer une paroi sur au moins l'une des faces d'une structure alvéolée, afin de former un panneau sandwich.

Plus précisément, le film adhésif perforé selon l'invention peut être placé sur une structure alvéolée plane ou incurvée et comportant des cellules de formes et de dimensions quelconques, agencées ou non selon un réseau régulier.

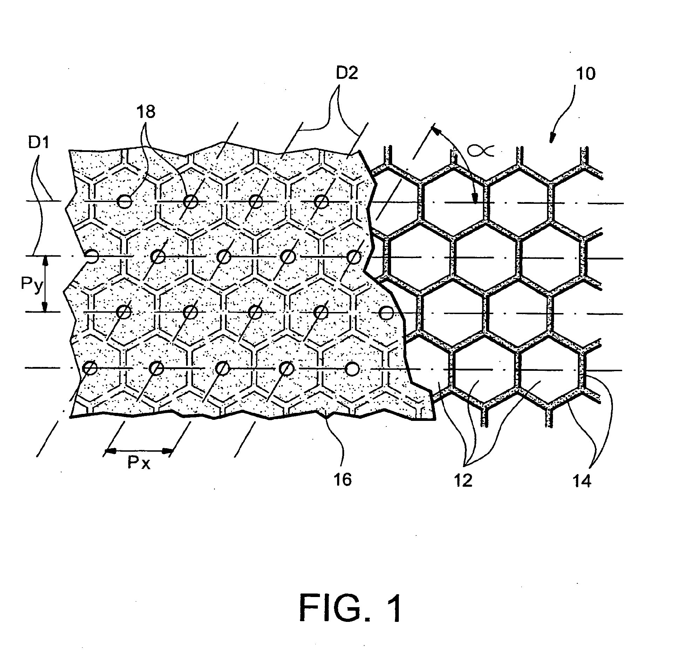

Comme on l'a illustré à titre d'exemple sur la figure 1, dans le cas d'une structure alvéolée 10 de type nid d'abeilles ou "NIDA" formée de cellules hexagonales 12 juxtaposées selon un réseau régulier et séparées par des cloisons 14, le film adhésif perforé 16 conforme à l'invention comporte une pluralité de trous 18 agencés de façon telle qu'au moins un trou 18 et au plus trois trous 18 soient situés en face de chacune des cellules 14.

Les trous 18 sont destinés à faciliter la migration de la colle vers les extrémités des cloisons 14 des cellules 12, lorsque le film adhésif 16 est chauffé. On forme ainsi sur les extrémités des cloisons 14 des cellules 12 des bourrelets de colle qui serviront ensuite au collage d'une paroi sur la face correspondante de la structure alvéolée 10.

Plus précisément, le nombre, la disposition et les dimensions des trous 18 sont déterminés afin de faciliter l'amorçage du fluage de la colle, tout en gardant dans chacune des cellules 12 une quantité de colle suffisante pour former les bourrelets. En effet, plus les trous 18 sont de grandes dimensions, plus la quantité de colle contenue dans le film adhésif est diminuée. En pratique, on obtient de bons résultats avec des trous 18 d'un diamètre moyen sensiblement égal à 1 mm, mais d'autres dimensions peuvent convenir.

Dans la pratique, les trous 18 ont une forme différente d'un cylindre de section circulaire, afin de faciliter la migration de la colle à partir des différents trous vers les extrémités des cloisons des cellules lorsque le film est chauffé. Ainsi, les trous 18 sont généralement de section circulaire, mais présentent un diamètre non uniforme sur l'épaisseur du film adhésif 16. A titre d'exemple non limitatif, les trous 18 peuvent notamment être de forme tronconique. L'expression "diamètre moyen" utilisée au paragraphe précédent tient compte du fait que les trous 18 présentent, de préférence, une forme différente d'un cylindre de section circulaire.

Lorsque la structure alvéolée 10 présente une surface à encoller sensiblement plane et des cellules 12 alignées disposées selon un réseau régulier, la présence d'au moins un trou 18 en face de chacune des cellules 12 peut être assurée en utilisant un film adhésif 16 percé de trous 18 disposés selon un réseau régulier et dont le pas d'écartement correspond au pas des cellules 12 selon deux directions de la surface plane à encoller.

La figure 1 illustre cet agencement, dans le cas particulier d'une structure alvéolée 10 dont les cellules 12 sont disposées selon un réseau hexagonal régulier. Dans ce cas, les trous 18 sont disposés selon un réseau triangulaire équilatéral régulier, dont le pas est égal à celui du réseau formé par les cellules 12.

Toutefois, dans de nombreux cas, la structure alvéolée 10 est souple et déformable. Il en résulte que les cellules 12 ne sont pas parfaitement alignées. De plus, certaines pièces à fabriquer ne sont pas planes. Or, une courbure de la structure alvéolaire a pour effet de déformer l'alignement de ses cellules. Des déformations de la structure alvéolée peuvent aussi être dues aux manipulations dont celle-ci est l'objet, à l'humidité, etc. Tous ces agencements ont pour conséquence que les cellules 12 ne sont pas parfaitement alignées. L'utilisation d'un film adhésif tel que décrit au paragraphe précédent ne permet alors pas de garantir la présence d'un trou 18 au centre de l'extrémité de chacune des cellules 12 de la structure alvéolée.

Pour satisfaire aux exigences contradictoires énoncées précédemment, on utilise alors un film adhésif 16 dont les trous 18 sont disposés de façon telle que, pour une grande majorité des cellules 12, le nombre des trous 18 situés en face d'elles soit au plus égal à trois et au moins égal à un. En effet, un trop grand nombre de trous 18 en face d'une même cellule 12 risquerait d'amener la colle à migrer de façon irrégulière sur le périmètre de l'extrémité de cette cellule 12, en particulier si les trous 18 étaient localisés près des extrémités des cloisons 14 de cette cellule 12. En d'autres termes, le bourrelet de colle formé présenterait des accumulations de colle à certains emplacements et des manques de colle à d'autres emplacements.

La migration de la colle s'effectue de façon d'autant plus homogène que le ou les trous 18 sont situés à proximité du centre de l'extrémité de la cellule 12 considérée. En limitant le nombre des trous 18 situés en face de chaque cellule 12 sensiblement à trois, on garantit une bonne répartition de la colle et, par conséquent, un bon collage ultérieur de la paroi sur la structure alvéolée 10.

Lorsque plusieurs trous 18 (par exemple deux ou trois) correspondent à une même extrémité de cellule 12, des fils de colle peuvent subsister à ladite extrémité après l'opération de fluage et de migration de la colle. Toutefois, cela n'est pas gênant car, dans une grande majorité des cas, ces fils se fluidifient, se cassent, puis la colle migre vers les bords des alvéoles lors de l'étape de polymérisation correspondant au collage de la paroi sur la structure alvéolaire 10.

De nombreux essais réalisés dans le cadre de ce procédé ont permis de définir une disposition optimale des trous 18, même dans le cas d'une structure alvéolée 10 déformée ou courbe. Ces essais ont été réalisés sur des structures en nid d'abeilles de marque "Eurocomposite" ou "Hexcel", comportant des cellules 12 sensiblement hexagonales de dimensions telles que le diamètre du cercle inscrit dans chacune des cellules 12 est sensiblement égal à 9,5 mm (soit 3/8 de pouce) . Le film adhésif 16 utilisé était de type thermodurcissable, de marque "3M", référence AF191.U.

La disposition optimale des trous 18 établie grâce à ces essais correspond sensiblement à celle qui est illustrée sur la figure 1. Ainsi, les trous 18 sont disposés selon deux directions D1 et D2 qui font entre elles un angle α de 60°, c'est-à-dire selon un réseau triangulaire régulier.

Dans l'exemple chiffré considéré lors des essais, les trous 18 sont espacés entre eux d'un pas Px sensiblement égal à 7 mm selon une première direction D1. Selon la seconde direction D2, les trous 18 sont espacés entre eux de façon que la projection Py du pas qui les sépare, sur une droite perpendiculaire à la première direction D1, soit sensiblement égale à 4,5 mm. Le résultat obtenu grâce à cette disposition est satisfaisant puisque seulement moins de trois cellules restent bouchées par le film adhésif 16 sur un panneau de plus d'un mètre carré.

Pour une structure alvéolée dont les cellules présentent des dimensions différentes, on utilisera un film adhésif 16 percé de trous 18 agencés de façon similaire, en appliquant un facteur de proportionnalité aux valeurs du pas Px et de la distance Py données au paragraphe précédent. Ainsi, de façon générale, on donne au pas Px une valeur sensiblement égale à 7.Po/9,5 et à la distance Py une valeur sensiblement égale à 4,5.Po/9,5, Po étant le pas qui sépare les cellules 12 de la structure alvéolée 10.

L'invention concerne également un procédé de fabrication du film adhésif perforé qui vient d'être décrit.

Selon un mode de réalisation préféré, on utilise un film adhésif non perforé, dans lequel on réalise les trous 18 par poinçonnage au moyen d'un ou plusieurs poinçons.

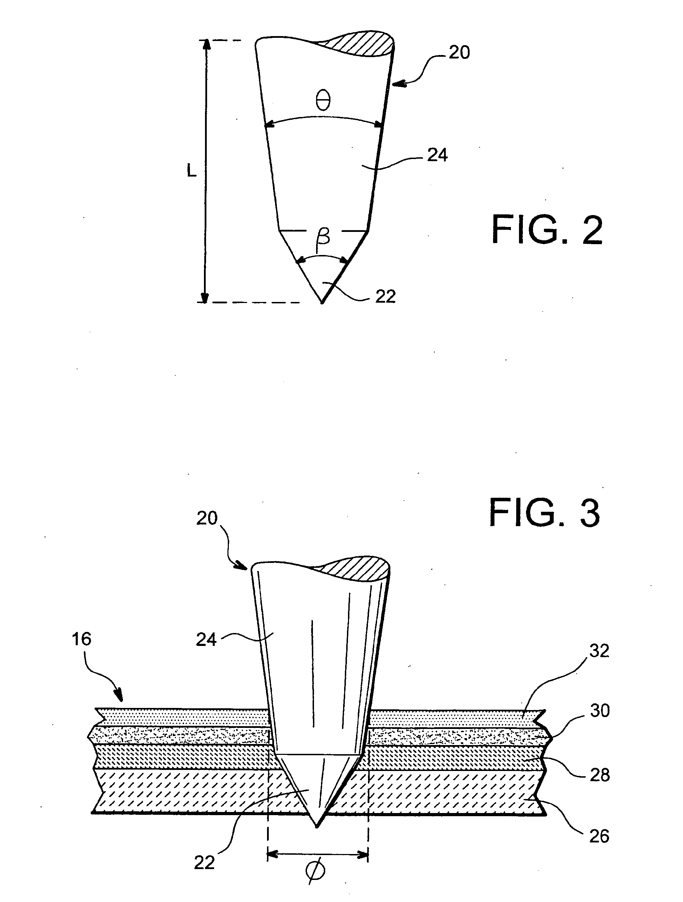

Pour réaliser des trous 18 de forme tronconique, le poinçon 20 peut être réalisé comme l'illustre la figure 2. Le poinçon comporte alors, de préférence, une partie d'extrémité conique 22 et une partie adjacente tronconique 24.

La longueur L du poinçon 20 est, par exemple, d'environ 6 à 8 mm. La partie d'extrémité conique 22 du poinçon 20 présente un angle β compris entre 30° et 35° environ et forme la pointe du poinçon. La partie adjacente tronconique 24 présente un angle θ compris entre 20° et 25° environ et forme le corps du poinçon. C'est le corps du poinçon qui a pour effet de former le trou tronconique 18, lorsqu'il pénètre dans le film adhésif 16.

Bien entendu, cette forme du poinçon 20 n'est donnée qu'à titre d'exemple non limitatif. De façon générale, l'homme du métier utilisera un poinçon adapté à la forme du trou 18 qu'il souhaite réaliser dans le film adhésif. A titre d'exemple, on peut réaliser des trous de section carrée, triangulaire ou autre à l'aide de poinçons de formes adaptées.

La figure 3 montre le perçage du film adhésif 16 au moyen du poinçon de la figure 2. Sur cette figure, on voit que, lorsque le film adhésif 16 est poinçonné, il comprend dans l'ordre un carton rigide 26, un séparateur papier 28, une couche d'adhésif 30 et un séparateur 32 en polyéthylène. Afin que le fluage et la migration de la colle soient homogènes pour chacun des trous 18 pratiqués dans le film adhésif 16, il est à noter que l'opération de poinçonnage est exécutée de préférence dans le même sens pour l'ensemble des trous, par exemple en faisant pénétrer le poinçon 20 depuis le séparateur 32 en polyéthylène vers le carton rigide 26, comme l'illustre la figure 3.

Pour la production industrielle d'un film adhésif perforé conforme à l'invention, on peut notamment utiliser une plaque plane rigide munie d'une pluralité de poinçons tel que le poinçon 20 de la figure 2.

Les poinçons sont disposés sur la plaque de préférence perpendiculairement à son plan, la pointe de chaque poinçon étant orientée du côté opposé à ladite plaque. Les poinçons sont agencés sur la plaque de façon telle que leurs axes correspondent à la disposition souhaitée des trous 18 sur le film adhésif 16. De préférence, les pointes des différents poinçons 20 sont situées dans un même plan afin d'assurer une pénétration homogène de ceux-ci dans le film adhésif. Cet agencement permet de réaliser des trous 18 de forme homogène.

Dans ce cas, le procédé de fabrication du film adhésif perforé conforme à l'invention consiste à :
1. disposer le film adhésif non perforé sur un support approprié ;
2. placer la plaque munie de poinçons sur le film adhésif, de telle sorte que le plan principal de la plaque soit parallèle à la surface du film adhésif ;
3. appliquer la plaque sur le film adhésif, selon le sens de poinçonnage souhaité, en maintenant le plan principal de la plaque parallèle à la surface du film adhésif, jusqu'à ce que l'enfoncement des poinçons corresponde à la valeur désirée pour les dimensions des trous 18 ;
4. retirer la plaque munie de poinçons ;
5. récupérer le film adhésif perforé.

Dans le cas où le film adhésif à perforer est de grande longueur, on peut avantageusement utiliser une plaque munie de poinçons dont les dimensions sont inférieures à celles du film adhésif. La perforation de l'ensemble du film est alors assurée en effectuant un déplacement relatif entre la plaque munie de poinçons et le film adhésif.

Ce déplacement relatif peut notamment être obtenu en déplaçant le support du film adhésif par rapport à la plaque munie de poinçons, après chaque mise en oeuvre de celle-ci. Dans ce cas, les étapes 1 à 4 ci-dessus sont inchangées et l'étape 4 est suivie par les étapes suivantes :
4a. avancer le support mobile d'une longueur correspondant à la longueur du film adhésif que perfore la plaque munie de poinçons ;
4b. renouveler les étapes 2, 3, 4 et 4a autant de fois que nécessaire jusqu'à ce que toute la longueur du film adhésif soit perforée ;
5. récupérer le film adhésif perforé.

Dans la pratique, l'homme du métier prendra soin de choisir la longueur afin que les trous 18 réalisés à l'arrière d'une région correspondant à une exécution des étapes 2, 3 et 4 et les trous réalisés à l'avant d'une région correspondant à l'exécution suivante des étapes 2, 3 et 4 soient disposés sans discontinuité, aussi bien en ce qui concerne leurs espacements qu'en ce qui concerne leurs orientations. Ainsi, le film adhésif perforé se présente comme s'il avait été réalisé avec une seule plaque de grandes dimensions, munie de poinçons.

Dans un autre mode de réalisation du film adhésif perforé conforme à l'invention, la plaque munie de poinçons se déplace de façon à perforer successivement différentes régions du film adhésif, qui reste alors fixe.

Dans encore un autre mode de réalisation du film adhésif perforé conforme à l'invention, la plaque munie de poinçons est remplacée par un rouleau muni de poinçons. Ces derniers sont alors orientés selon des directions normales à sa surface extérieure cylindrique. Le rouleau muni de poinçons peut alors être entraîné en rotation à une vitesse asservie à l'avance d'un tapis roulant supportant le film adhésif à perforer. L'axe du rouleau est alors situé dans un plan parallèle au plan du tapis roulant et orienté selon une direction perpendiculaire à la direction d'avance de ce dernier.

Dans ce cas, la distance entre le rouleau muni de poinçons et le tapis roulant est réglée de façon telle que la rotation du rouleau autour de son axe combinée avec l'avance du tapis roulant a pour effet de provoquer la pénétration des poinçons dans le film adhésif. Ce mode de réalisation permet la fabrication en continu de films adhésifs perforés de grandes longueurs.

## Revendications

1. Film adhésif, destiné au collage d'une paroi sur une face d'une structure alvéolaire (10) comportant des cellules (12) juxtaposées débouchant sur la dite face, **caractérisé en ce que** le film adhésif (16) est traversé par des trous (18) sensiblement circulaires et ayant un diamètre non uniforme sur l'épaisseur dudit film (16) au moins l'une des trous (18) étant placé face de chacune des cellules (12) de la structure alvéolée (10) lors dudit collage.

2. Film adhésif selon la revendication 1, dans lequel ledit film (16) est percé au plus de trois trous (18) en face de chacune des cellules (12) de la structure alvéolée (10).

3. Film adhésif selon l'une quelconque des revendications 1 et 2, dans lequel les trous (18) sont sensiblement tronconiques.

4. Film adhésif selon la revendication 3, dans lequel les trous (18) ont un diamètre moyen sensiblement égal à 1 mm.

5. Film adhésif selon l'une quelconque des revendications 1 à 4, dans lequel les trous (18) sont répartis selon un réseau triangulaire régulier.

6. Film adhésif selon la revendication 5, dans lequel les trous (18) sont alignés entre eux selon deux directions (D1, D2) formant entre elles un angle d'environ 60°.

7. Film adhésif selon la revendication 6, dans lequel les trous (18) sont espacés entre eux d'un pas Px sensiblement égal à 7xPo/9,5 dans une première (D1) desdites directions et d'une distance Py sensiblement égale à 4,5xPo/9,5 dans une direction orthogonale à cette première direction, Po étant le pas séparant les cellules de la structure alvéolée (10).

8. Procédé de fabrication d'un film adhésif selon l'une quelconque des revendications précédentes, dans lequel les trous (18) sont formés par poinçonnage d'un film adhésif non perforé.

9. Procédé selon la revendication 8, dans lequel on réalise tous les trous (18) en poinçonnant le film adhésif dans un même sens.

10. Procédé selon l'une quelconque des revendications 8 et 9*,* dans lequel on utilise au moins un poinçon (20) comportant une partie d'extrémité (22) conique, d'angle (β) compris entre 30° et 35° environ et une partie adjacente (24) tronconique, d'angle (θ) compris entre 20° et 25° environ.

11. Procédé selon l'une quelconque des revendications 8 à 10, dans lequel on réalise les trous (18) au moyen d'une plaque munie d'une pluralité de poinçons (20).

12. Procédé selon la revendication 10, dans lequel on effectue un déplacement relatif entre la plaque et le film adhésif (16), après la réalisation d'une série de trous (18) au moyen de ladite plaque.

13. Procédé selon l'une quelconque des revendications 8 à 10, dans lequel on réalise les trous (18) au moyen d'un rouleau rotatif muni d'une pluralité de poinçons (20).

## Claims

1. Adhesive film intended for use to glue a wall on one face of a cellular structure (10) comprising adjacent cells (12) opening up on the said face, **characterized in that** the adhesive film (16) is traversed by holes (18) which are substantially circular and have a non-uniform diameter over the thickness of said film (16), at least one hole (18) facing each of the cells (12) of the cellular structure (10) during said gluing.

2. Adhesive film according to claim 1, wherein the said film (16) is perforated with not more than three holes (18) facing each of the cells (12) of the cellular structure (10).

3. Adhesive film according to either of claims 1 and 2, wherein the holes (18) are significantly tapered.

4. Adhesive film according to claim 3, wherein the holes (18) have an average diameter approximately equal to 1 mm.

5. Adhesive film according to any one of claims 1 to 4, wherein the holes (18) are distributed according to a regular triangular network.

6. Adhesive film according to claim 5, wherein the holes (18) are aligned with each other along two directions (D1, D2) forming an angle of about 60° between them.

7. Adhesive film according to claim 6, wherein the holes (18) are at a spacing Px equal to approximately 7xPo/9.5 along a first (D1) of the said directions and at a distance Py equal to approximately 4.5xPo/9.5 in a direction orthogonal to this first direction, where Po is the pitch separating the cells of the cellular structure (10).

8. Process for making an adhesive film, according to any ona of the previous claims, wherein the holes (18) are formed by punching an unperforated adhesive film.

9. Process according to claim 8, wherein all the holes (18) are made by punching the adhesive film in the same direction.

10. Process according to either of claims 8 and 9, wherein at least one punch (20) is used comprising a conical end part (22) with an angle β af between approximately 30° and 35°, and with an adjacent tapered part (24) with an angle θ of between about 20° and 25°.

11. Process according to any one of claims 8 to 10, wherein the holes (18) are made using a plate fitted with a plurality of punches (20).

12. Process according to claim 10, wherein a relative displacement between the plate and the adhesive film (16) is made, after a series of holes (18) have been perforated using the said plate.

13. Process according to any one of claims 8 to 10, wherein holes (18) are made using a rotary roller with a plurality of punches (20).

## Patentansprüche

1. Klebefilm, der zum Kleben einer Wand auf eine Fläche einer Zellstruktur (10) bestimmt ist, welche nebeneinander angeordnete, auf die Fläche mündende Zellen (12) umfasst, **dadurch gekennzeichnet, dass** der Klebefilm (16) von Löchern (18) durchsetzt ist, die im wesentlichen kreisförmig sind und einen nicht gleichmäßigen Durchmesser über die Dicke des Films (16) aufweisen, wobei mindestens eines der Löcher (18) beim Klebevorgang gegenüber jeder der Zellen (12) der Zellstruktur (10) zu liegen kommt.

2. Klebefilm nach Anspruch 1, wobei der Film (16) von höchstens drei Löchern (18) gegenüber jeder der Zellen (12) der Zellstruktur (10) durchlöchert ist.

3. Klebefilm nach einem der Ansprüche 1 oder 2, wobei die Löcher (18) im wesentlichen kegelstumpfförmig sind.

4. Klebefilm nach Anspruch 3, wobei die Löcher (18) einen mittleren Durchmesser im wesentlichen gleich 1 mm aufweisen.

5. Klebefilm nach einem der Ansprüche 1 bis 4, wobei die Löcher (18) in einem regelmäßigen Dreiecksnetz verteilt sind.

6. Klebefilm nach Anspruch 5, wobei die Löcher (18) untereinander in zwei Richtungen (D1,D2) ausgerichtet sind, die untereinander einen Winkel von etwa 60° bilden.

7. Klebefilm nach Anspruch 6, wobei die Löcher (18) untereinander mit einer Teilung Px im wesentlichen gleich 7 x Po/9,5 in einer ersten (D1) der Richtungen und in einem Abstand Py im wesentlichen gleich 4,5 x Po/9,5 in einer Richtung orthogonal zu dieser ersten Richtung beabstandet sind, wobei Po die Teilung bzw. der Abstand ist, welcher die Zellen der Zellstruktur (10) voneinander trennt.

8. Verfahren zur Herstellung eines Klebefilms nach einem der vorangehenden Ansprüche, wobei die Löcher (18) durch Durchlöchern eines nicht-durchlöcherten Klebefilms gebildet werden.

9. Verfahren nach Anspruch 8, wobei alle Löcher (18) durch Durchlöchern des Klebefilms in einer Richtung hergestellt werden.

10. Verfahren nach einem der Ansprüche 8 oder 9, wobei mindestens ein Lochstanzwerkzeug (20) verwendet wird, das einen konischen Endabschnitt (22) mit einem Winkel (β), der zwischen etwa 30° und 35° liegt, und einen angrenzenden kegelstumpfförmigen Abschnitt (24) mit einem Winkel (θ), der zwischen etwa 20° und 25° liegt, umfasst.

11. Verfahren nach einem der Ansprüche 8 bis 10, wobei die Löcher (18) mittels einer Platte hergestellt werden, die mit mehreren Lochstanzwerkzeugen (20) versehen ist.

12. Verfahren nach Anspruch 10, wobei eine Relativbewegung zwischen der Platte und dem Klebefilm (16) nach der Herstellung einer Reihe von Löchern (18) mittels der Platte ausgeführt wird.

13. Verfahren nach einem der Ansprüche 8 bis 10, wobei die Löcher (18) mittels einer Drehrolle, die mit mehreren Lochstanzwerkzeugen (20) versehen ist, hergestellt werden.
